# EUROPEAN PATENT SPECIFICATION

(11) **EP 1 467 836 B1**
(45) Date of publication and mention of the grant of the patent: **14.02.2007**
(21) Application number: 02805939.2
(22) Date of filing: 13.12.2002
(51) Int. Cl.: B21J 15/02, B21J 15/36

(54) **SELF-PIERCING RIVET SETTING APPARATUS AND SYSTEM**
STANZNIETSETZVORRICHTUNG UND -SYSTEM
SYSTEME ET DISPOSITIF DE POSE DE RIVETS AUTOPERFORANTS

(30) Priority: 25.12.2001 JP 2001391576
(43) Date of publication of application: 20.10.2004
(73) Proprietor: Newfrey LLC, Newark, Delaware 19711 (US)
(72) Inventor: NAITO, Nobuharu, Pop Rivet Fastener K.K., Toyohashi-shi, Aichi-ken (JP)
(74) Representative: Haar, Lucas Heinz Jörn
(86) International application number: PCT/US2002/039910
(87) International publication number: WO 2003/055640

(56) References cited:
- WO-A-01/30516
- DE-A1- 19 700 627
- US-A- 5 722 144
- US-A- 5 752 305
- US-B1- 6 263 560
- US-B1- 6 276 050
- US-B1- 6 385 843

## Description

### FIELD OF THE INVENTION

The present invention relates to a self-piercing rivet setting apparatus for setting, into a plurality of workpieces, a self-piercing rivet having a large-diameter head and a hollowed leg extending from the head. More specifically, the present invention relates to the self-piercing rivet setting apparatus for connecting a plurality of workpieces, such as two or more panels (or a panel and a component), by using a self-piercing rivet in a sheet-metal assembly operation such as automobile assembling (particularly, an aluminum body assembly operation).

One example of a self-piercing rivet setting apparatus is described in Japanese Patent Laid-Open No. 08-505087 (with family member WO-A-09/414554). Fig. 1 in this publication shows one example of a self-piercing rivet. The self-piercing rivet comprises a large-diameter head and a hollowed leg extending from the head. When the self-piercing rivet is driven into workpieces, such as two body panels, by a punch and a die of the setting apparatus, the front end of the leg is expanded and deformed as the leg pierces the panels, and the panels are finally connected with each other by the expanded leg and the head. The self-piercing rivet is suitable for connecting aluminum body panels to which welding is not applicable. The demand for the self-piercing rivet is increasing because aluminum bodies are increasingly employed to facilitate weight reduction in automobile bodies. In particular, since the self-piercing rivet is driven to pierce a punch-side workpiece but stay in a receiving-side workpiece adjacent to the die without passing therethrough, the rivet does not form any opening in the surface of the receiving-side workpiece. This advantageously maintains a sealing performance and good appearance of the receiving-side workpiece.

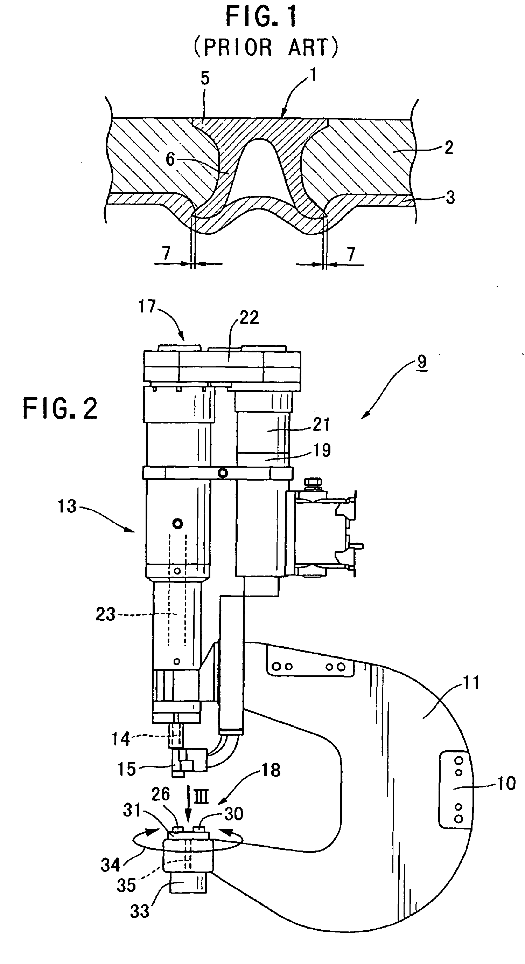

In a conventional self-piercing-rivet driving operation, if the punch-side workpiece has a greater thickness in a rivet-driving direction than that of the receiving-side workpiece adjacent to the die, a radial piercing length, that is, an undercut amount of the leg of the rivet obliquely piercing the receiving-side workpiece can be reduced, resulting in insufficient connecting strength. Such a condition will be described in conjunction with Fig. 1. Fig. 1 shows the condition when a self-piercing rivet 1 is driven into two workpieces 2 and 3 to connect the punch-side workpiece 2 (a plurality of punch-side workpieces may be provided in lieu of the illustrated example) with the receiving-side workpiece 3 adjacent to the die. The self-piercing rivet 1 has a large-diameter head 5 and a hollowed leg 6 extending from the head. When the punch-side workpiece 2 has a greater thickness than that of the receiving-side workpiece 3 as shown in Fig. 1, the radial piercing length or the undercut amount 7 of the leg of the rivet obliquely piercing the receiving-side workpiece is reduced, and thereby the workpiece 3 cannot be connected to the workpiece 2 with a sufficient strength. At the preset stage, it is typically required to limit a ratio of the thickness of the punch-side workpiece to the thickness the receiving-side workpiece adjacent to the die no more than the ratio of 2 to 1 (2:1) to assure a sufficient connecting force.

The above limitation (or the need for preventing the receiving-side workpiece from having a thickness of one-half or less of the thickness of the other workpiece in a self-piercing rivet driving region of the workpieces) imposes the restriction on the rivet-driving direction. For example, in Fig. 1, if the ratio of the thickness of the workpiece 2 to the other workpiece 3 exceeds 2 : 1 such as 3 : 1 or 4 : 1, and the self-piercing rivet is driven into the workpiece 3 as the receiving-side workpiece, an insufficient undercut amount 7 is resulted to thereby obtain undesired connecting strength. Thus, the workpiece 2 must be placed as the receiving-side workpiece by turning over the rivet setting apparatus or turning over both the workpiece 2 and the workpiece 3 to connect the workpiece 2 to the workpiece 3 with a sufficient strength. However, the rivet-setting operation cannot be carried out at a desirably increased speed due to a time required for turning over the setting apparatus or the workpieces. Besides, the turning-over operation per se can get into difficulties due to the restrictions on the workpiece shapes, the rivet-driving region and other factors.

Disclosed in document DE 197 00 627 A1, which forms a basis for the preamble of claim 1, is a self-piercing rivet setting apparatus comprising a first punch and a first die facing with the first punch and including a cylindrical cavity for receiving a pressure deformation of the workpieces placed between the first die and the first punch. The first punch has a cylindrical front end formed to penetrate the workpiece adjacent to the punch and to form a recess in the workpiece adjacent to the die. The apparatus further comprises a second punch and a second die facing therewith. The second die has a cylindrical cavity of a diameter identical with the diameter of the first die and a cone protruding from the center of its bottom wall. The second punch and the second die are adapted to drive a self-piercing rivet which is inserted in the pre-punched recess into the workpiece adjacent to the die and to expandingly deform the leg of the self-piercing rivet in its radial outward direction.

In another self-piercing rivet setting apparatus disclosed in WO 01/730516 A1 the head portion of the self-piercing rivet is pressed by a first punch into the workpieces placed on a first die which causes the distal end portion of the cylindrical leg of the rivet to deform radially outwards. Next the head of the rivet is punched by a second punch and a second die. The second punch is formed at its distal end portion with an elongate protrusion extending from the main body of the second punch, while the second die is formed with a recess into which the distal end portion of the protrusion can be inserted. The second punch further expands the rivet radially outwards for enhancing an increased fastening strength but provides a through hole in the joint.

It is an object of the present invention to provide a self-piercing rivet setting apparatus capable of reducing or eliminating the restriction on a rivet-driving direction with respect to a workpiece.

### SUMMARY OF THE INVENTION

In order to achieve the above object, the present invention provides a self-piercing rivet setting apparatus comprising a punch and a die for driving a self-piercing rivet into a plurality of workpieces including a receiving-side workpiece adjacent to the die. The self-piercing rivet has a large-diameter head and a hollowed leg extending from the head. In this self-piercing rivet setting apparatus, when the self-piercing rivet is driven into the workpieces, the leg is driven to pierce the workpieces while allowing the front end of the leg to be expanded and deformed in its radial outward direction and to be stayed in the receiving-side workpiece adjacent to the die without passing therethrough, to connect the plurality of workpieces with each other by the expanded leg and the head. Further, in the self-piercing rivet setting apparatus, the die includes a first die member having a first cavity formed as a simple hole and having a diameter capable of receiving a pressure deformation of the workpieces, and a second die member having a second cavity and a protruding pin provided at the center of the second cavity. The second cavity having a diameter greater than the outer diameter of the leg to expandingly deform the leg of the self-piercing rivet in its radial outward direction. Further the first die member is disposable at a position facing with the punch until the leg of the self-piercing rivet is driven into the workpieces in a straight direction and starts piercing the receiving-side workpiece adjacent to the first die member, and the second die member is disposable at the position facing with the punch in place of the first die member to allow the leg of the self-piercing rivet being piercing the receiving-side workpiece to be expanded and deformed in its radial outward direction when the leg of the self-piercing rivet starts piercing the receiving-side workpiece.

According to the above self-piercing rivet setting apparatus, until the front end of the leg of the self-piercing rivet starts piercing the receiving-side workpiece adjacent to the die, the first die member allows the leg to be driven into the workpiece in a straight direction. Then, when the leg starts piercing the receiving-side workpiece, the front end of the leg is widely expanded in its radial outward direction by the second die member to provide a sufficient undercut amount. The sufficient undercut amount can achieve an adequate connecting force even if the receiving-side workpiece has a thin thickness of one-half or less of that of the other workpiece (or the punch-side workpiece). This makes it possible to reduce or eliminate the restriction on the rivet-driving direction with respect to the workpieces. Thus, the complicated operation of turning over either the setting apparatus or the workpieces as in the conventional setting apparatus can be skipped or omitted to thereby achieve a speedy setting operation. Further, the setting operation can be carried out even in the conventionally impossible rivet-driving direction. The eliminated restriction on the rivet-driving region provides widened applicable area or region suitable for the self-piercing rivet setting operation.

The setting apparatus may further include a C-shaped frame. In that case, the punch is attached to one of the ends of the C-shaped frame to be movable toward the other end of the C-shaped frame, and the first and second die members are attached to the other end of the C-shaped frame. Further, the other end of the C-shaped frame is provided with a rotary table for supporting the first and second die members. The rotary table is operable to allow either one of the first and second die members to be selectively positioned at the position facing with the punch to receive the self-piercing rivet to be driven by the punch. In the self-piercing rivet setting apparatus according to the present invention, the number of the die members is not limited to two but it may be three or more. Further, these die members may be selectively replaced depending on a piercing depth of the self-piercing rivet.

The present invention also provides a self-piercing rivet setting system having self-piercing rivet setting apparatuses each including a punch and a die for driving a self-piercing rivet into a plurality of workpieces having a receiving-side workpiece adjacent to the die, the self-piercing rivet having a large-diameter head and a hollowed leg extending from the head, wherein when the self-piercing rivet is driven into the workpieces, the leg is driven to pierce the workpieces while allowing the front end of the leg to be expanded and deformed in its radial outward direction and to be stayed in the receiving-side workpiece adjacent to the die without passing therethrough to connect the plurality of workpieces with each other by the expanded leg and the head. The self-piercing rivet setting system of the present invention comprises a first self-piercing rivet setting apparatus including a first die which has a first cavity, a second self-piercing rivet setting apparatus including a second die member which has a second cavity and a protruding pin provided at the center of the second cavity, the second cavity and protruding pin of the second die member being adapted to allow the leg of the self-piercing rivet being piercing the workpieces to be expanded and deformed in its radial outward direction; the first cavity of the first die member is formed as a simple hole having a diameter capable of receiving a pressure deformation of the workpieces caused by a pressing force of the leg of the self-piercing rivet when the self-piercing rivet is pressed against the first die member by the punch; and exchanging means are provided for placing the first self-piercing rivet setting apparatus with respect to the workpieces until the leg of the self-piercing rivet is driven into the workpieces in a straight direction and starts piercing the receiving-side workpiece, and for placing the second self-piercing rivet setting apparatus with respect to the workpiece in place of the first self-piercing rivet setting apparatus to allow the leg of the self-piercing rivet being piercing the receiving-side workpiece to be expanded and deformed in its radial outward direction when the leg of the self-piercing rivet starts piercing the receiving-side workpiece.

According to this system, the first self-piercing rivet setting apparatus allows the leg to be driven into the workpiece in a straight direction until the front end of the leg of the self-piercing rivet starts piercing the receiving-side workpiece adjacent to the die. Then, when the leg starts piercing the receiving-side workpiece, the front end of the leg is widely expanded in its radial outward direction by the second self-piercing rivet setting apparatus, to provide a sufficient undercut amount. The sufficient undercut amount can achieve a desired connecting force even if the receiving-side workpiece has a thin thickness of one-half or less of that of the punch-side workpiece. This makes it possible to reduce or eliminate the restriction on the rivet-driving direction with respect to the workpieces. Thus, the complicated operation of turning over either the setting apparatus or the workpieces as seen in the conventional setting apparatus can be skipped or omitted to achieve a speedy setting operation. Further, the setting operation can be carried out even in the conventionally impossible rivet-driving direction. The eliminated restriction on the rivet-driving region provides widened applicable area or region suitable for the self-piercing rivet setting operation.

### BRIEF DESCRIPTION OF THE DRAWINGS

Fig. 1 is a sectional view showing connected workpieces with a self-piercing rivet driven by a conventional setting apparatus.
Fig. 2 is a front view of a self-piercing rivet setting apparatus according to one embodiment of the present invention.
Fig. 3 is a top plan view of a die when seeing from the arrow III of the self-piercing rivet setting apparatus in Fig. 2.
Fig. 4 is a sectional view of a first die member and a punch in the condition when a self-piercing rivet is being driven into workpieces by using the first die member of the self-piercing rivet setting apparatus shown in Figs. 2 and 3.
Fig. 5 is a sectional view of a second die member and the punch in the condition when a self-piercing rivet is driven into workpieces to connect the workpieces with each other by using the second die member of the self-piercing rivet setting apparatus shown in Figs. 2 and 3.

### DETAILED DESCRIPTION OF THE PREFERRED EMBODIMENT

With reference to the drawings, an embodiment of the present invention will now be described. Fig 2 schematically shows the entire structure of a self-piercing rivet setting apparatus 9 according one embodiment of the present invention. In Fig. 2, the self-piercing rivet setting apparatus 9 includes a C-shaped frame 11 having a coupling portion 10 to be coupled with an articulated robot arm (not shown). The C-shaped frame 3 is an integral rigid body including an upper horizontal arm, a vertical arm having the coupling portion 10 attached thereto, and a lower horizontal arm. A rivet setting assembly 13 of the self-piercing rivet setting apparatus is attached to or one of the ends or the end of the upper horizontal arm of the C-shaped frame 11. The setting assembly 13 is provided with a punch 14 movably attached to the front-end (the lower end in Fig. 2) thereof. A receiver unit 15 extends from the punch 14 to the front-end side. A self-piercing rivet (see the self-piercing rivet 1 in Fig. 1) is fed to and held in the receiver unit 15 and driven by the punch 14. A spindle type driving unit 17 is provided on the upper side of the punch 14. The spindle type driving unit 17 is operable to press the punch 14 so as to drive the self-piercing rivet held in the receiver unit on the lower side of the punch. A die 18 is attached to the other end or the end of the lower horizontal arm of the C-shaped frame 11. For example, the spindle type driving unit 17 comprises an electric driving motor, a reduction gear assembly 21 and a gear assembly 22 for transmitting a rotation force of the motor, and a spindle 23 adapted to move vertically while rotating according to the rotation force of the motor through a belt. When the spindle moves downward according the rotation force of the motor, this movement is transmitted to the punch 14, and then the punch 14 strongly presses the self-piercing rivet held in the receiver unit 15, toward the die 18. A plurality of workpieces (for example, see the workpieces 2 and 3 in Fig. 1) are placed on the die 18. According to the downward movement of the punch 14, the self-piercing rivet is driven into the plurality of workpieces to connect these workpieces with each other. The C-shaped frame 11 elastically supports the setting assembly 13 and the die 18 to absorb an impact force during the rivet-driving operation.

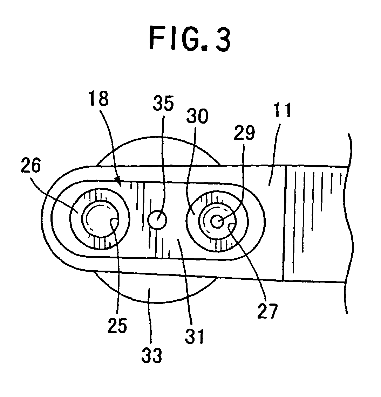

In the present invention, the die 18 comprises a plurality of die members. In Figs. 2 and 3, the die 18 includes a first die member 26 having a cavity 25 adapted to allow the leg of the self-piercing rivet to be driven into the workpieces in a straight direction when the self-piercing rivet is pressed by the punch, and a second die member 30 having a cavity 27 and a protruding pin 29 provided at the center of the cavity 27 which are adapted to allow the leg of the self-piercing rivet being piercing the workpieces to be expanded and deformed in its radial outward direction. While the illustrated embodiment has the die 18 comprised of two die members, the die 18 may be comprised of three or more die members each having a different shape. In the illustrated embodiment, the cavity 25 of the first die member 26 is formed as a simple cylindrical hole having a diameter capable of receiving a pressure deformation of the workpieces caused by a pressing force of the leg of the self-piercing rivet. The cavity 27 of the second die member 30 is formed as a cylindrical hole which surrounds the central protruding pin 29, and has a diameter greater than the outer diameter of the leg and a depth less than the cavity 25 to expandingly deform the leg of the self-piercing rivet in its radial outward direction.

The first die member 26 and the second die member 30 are attached onto a rotary table 31. According to rotation of the rotary table, either one of the first and second die members 26 and 30 is selectively positioned at a position facing with the punch to receive the self-piercing rivet to be driven by the punch 14. To this end, a rotational drive device 33 such as a motor attached to the C-shaped frame is provided to rotate the rotary table 31 about a shaft 35 in Fig. 3 as shown by the arrow in Fig. 2 to position either one of the first and second die members 26 and 30 below the punch 14. Further, a control unit (not shown) of the self-piercing rivet setting apparatus 9 controls the rotational drive device 33 to position either one of the first and second die members 26 and 30 below the punch 14 at a predetermined timing.

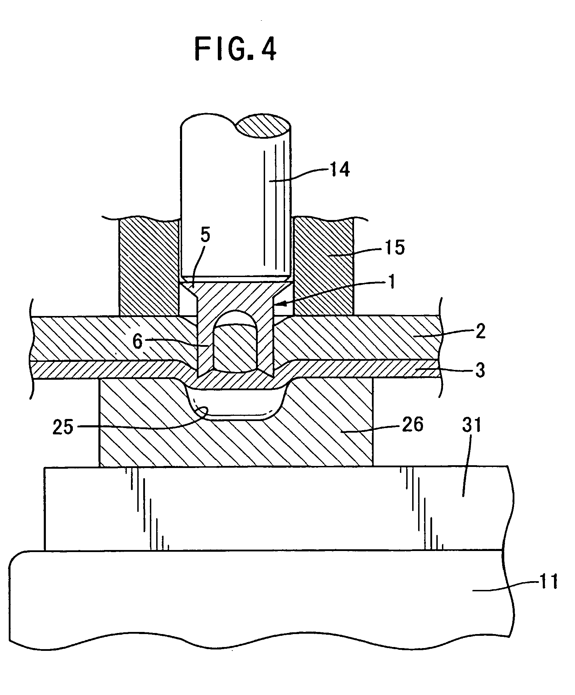

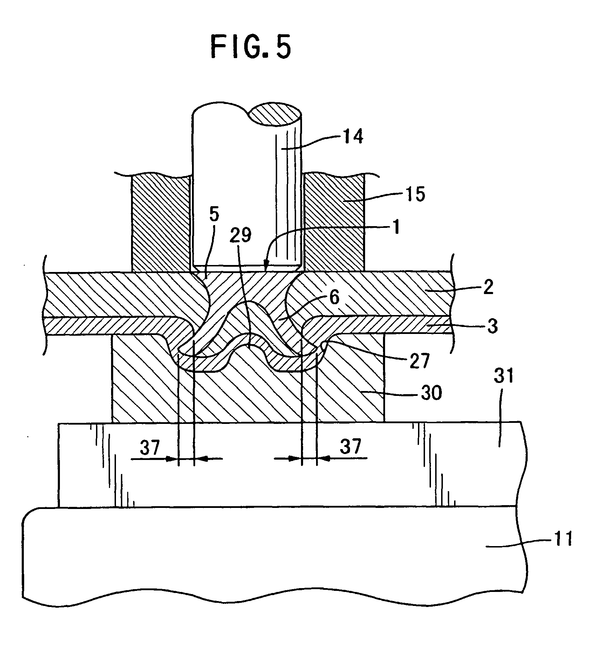

With reference to Figs. 4 and 5, an operation of driving the self-piercing rivet using the self-piercing rivet setting apparatus 9 will be described below. In Fig. 4, the self-piercing rivet 1 is automatically fed from a feeding unit (not shown) to the receiver unit 15, and held in the receiver unit 15 to locate it below the punch 14. The workpieces 2 and 3 to be connected with one another are placed between the die 18 and the punch 14. It is to be understood that the number of the workpieces may be two or more. In the present invention, at a first step of the rivet-driving operation, the first die member 26 is positioned below the punch 14 by the rotation of the rotary table 31. The punch 14 is moved downward by the spindle type driving unit 17 (Fig. 2) to drive the self-piercing rivet 1 into the punch-side workpiece 2. During this rivet-driving operation, the hollowed leg 6 of the self-piercing rivet 1 progressively pierces the workpiece 2, and the configuration of the cavity 25 of the first die member 26 allows the leg 6 of the self-piercing rivet 1 to be driven into the workpiece 2 in a straight direction. The punch 14 continues to press the self-piercing rivet until the piercing depth of the leg 6 reaches the receiving-side workpiece 3 adjacent to the first die member 26. When the leg 6 starts piercing the receiving-side workpiece 3, the resulting reaction force is transmitted to the punch 14. At detecting of the reaction force, the spindle type driving unit 17 temporarily stops providing the pressing force to the punch 14.

After the pressing force to the punch 14 is stopped, the rotary table 31 is rotated to position the second die member 30 at a position below the punch 14 and under the receiving-side workpiece 3 of the workpieces 2 and 3. After the second die member 30 is positioned in its place, the spindle type driving unit 17 applies the pressing force to the punch 14 again to restart driving into the receiving-side workpiece 3 the self-piercing rivet which has just started piercing the receiving-side workpiece 3. The configuration of the cavity 27 and the central protruding pin 29 of the second die member allows the leg 6 of the self-piercing rivet being piercing the receiving-side workpiece 3 to be expanded and deformed in its radial outward direction. Referring to Fig. 5, when the front end of the leg 6 of the self-piercing rivet 1 pierces the receiving-side workpiece 3 adjacent to the second die member 30, the top of the protruding pin 29 contacts the die-facing side of the receiving-side workpiece 3. The protruding pin 29 acts to stick the contact area of the receiving-side workpiece 3 due to the pressure of the receiving-side workpiece by the pressing force of the punch 14. Since the protruding pin 29 is located at the center of the opening of the leg 6 of the self-piercing rivet, the front end of the leg 6 of the self-piercing rivet 1 is widely expanded in its radial outward direction. Thus, the leg 6 is expanded and deformed widely in its radial outward direction to pierce the receiving-side workpiece. Then, the rivet-driving operation is completed before the front end of the led 6 is pushed through the receiving-side workpiece. As a result, the leg 6 is largely deformed in its radial direction to provide a sufficient piercing length or undercut amount 37 in the radial direction of the leg 6. The two workpieces 2 and 3 are connected with each other by the expanded and deformed leg 6 and the large-diameter head 5. In the present invention, the sufficient undercut amount 37 of the expanded leg 6 allows the workpieces 2 and 3 to be connected with an adequate connecting force even if the receiving-side workpiece 3 has a thin thickness of one-half or less of the other workpiece (or the punch-side workpiece). This makes it possible to reduce or eliminate the restriction on the rivet-driving direction with respect to the workpieces. Thus, the complicated operation of turning over the setting apparatus or the workpieces as in the conventional self-piercing rivet setting apparatus can be skipped or omitted to achieve a speedy setting operation. Further, the setting operation can be carried out even in the conventionally impossible rivet-driving direction. The eliminated restriction on the rivet-driving region provides widened applicable area or region suitable for the self-piercing rivet setting operation.

When the number of the die members is three or more, a cavity of a die member corresponding to the first die member is formed in a configuration allowing the leg of the self-piercing rivet to be driven into the workpieces in a straight direction until the front end of the leg reaches a receiving-side workpiece. With respect to the remaining die members corresponding to the second die member, a cavity and a protruding pin of each die member are formed in respective configurations varied to the other die members to thereby allow the leg of the self-piercing rivet to be widely expanded in its radial outward direction after the front end of the leg reaches the receiving-side workpiece. When the self-piercing rivet is driven into a plurality of workpieces, the die members are sequentially replaced while controlling the punch to repeat the pressing operation to the self-piercing rivet and the stop of the pressing operation.

In another embodiment, a self-piercing rivet setting system is provided. This self-piercing rivet setting system comprises a first self-piercing rivet setting apparatus and a second self-piercing rivet setting apparatus. The first self-piercing rivet setting apparatus includes a first die which has a first cavity. The second self-piercing rivet setting apparatus includes a second die which has a second cavity and a protruding pin provided at the center of the second cavity. In this embodiment, the first cavity of the first self-piercing rivet setting apparatus is adapted to allow the leg of the self-piercing rivet to be driven into the workpieces in a straight direction when the self-piercing rivet is pressed by the punch. The second cavity and the protruding pin of the second self-piercing rivet setting apparatus are adapted to allow the leg of the self-piercing rivet being piercing the workpieces to be expanded and deformed in its radial outward direction. The self-piercing rivet setting system further include exchanging means for placing the first self-piercing rivet setting apparatus to the workpieces until the leg of the self-piercing rivet is driven into the workpieces in a straight direction and starts piercing the receiving-side workpiece, and for placing the second self-piercing rivet setting apparatus to the workpiece in place of the first self-piercing rivet setting apparatus to allow the leg of the self-piercing rivet being piercing the receiving-side workpiece to be expanded and deformed in its radial outward direction when the leg of the self-piercing rivet starts piercing the receiving-side workpiece. The exchanging means for replacing and positioning the first and second self-piercing rivet setting apparatuses may be achieved by use of a tool changer.

According to the present invention, until the front end of the leg of the self-piercing rivet starts piercing the receiving-side workpiece adjacent to the die, the protruding pin does not act on the receiving-side workpiece. Then, when the front end of the leg of the self-piercing rivet starts piercing the receiving-side workpiece, the protruding pin reliably acts on the receiving-side workpiece. Thus, the leg is driven into the workpieces in a straight direction until the leg enters in the receiving-side workpiece. However, when the leg starts piercing the receiving-side workpiece, the protruding pin acts to widely expand the front end of the leg in its radial outward direction to provide a sufficient undercut amount. The sufficient undercut amount can achieve an adequate connecting force even if the receiving-side workpiece has a thin thickness of one-half or less of that of the other workpiece (or the punch-side workpiece). This makes it possible to reduce or eliminate the restriction on the rivet-driving direction with respect to the workpieces. Thus, the complicated operation of turning over the setting apparatus or the workpieces as in the conventional setting apparatus can be skipped or omitted to achieve a speedy setting operation. Further, the setting operation can be carried out even in the conventionally impossible rivet-driving direction. The eliminated restriction on the rivet-driving region provides widened applicable area or region suitable for the self-piercing rivet setting operation.

## Claims

1. A self-piercing rivet setting apparatus (9) comprising a punch (14) and a die (18) for driving a self-piercing rivet (1) into a plurality of workpieces (2, 3) including a receiving-side workpiece (3) adjacent to the die (18), the self-piercing rivet (1) having a large-diameter head (5) and a hollowed leg (6) extending from the head (5), wherein when the self-piercing rivet (1) is driven into the workpieces (2, 3), the leg (6) is driven to pierce the workpieces (2, 3) while allowing the front end of the leg (6) to be expanded and deformed in its radial outward direction and to be stayed in the receiving-side workpiece (3) adjacent to the die (18) without passing therethrough to connect the plurality of workpieces (2, 3) with each other by the expanded leg (6) and the head (5); and wherein the die (18) includes a first die member (26) having a first cavity (25) formed as a simple hole and having a diameter capable of receiving a pressure deformation of the workpieces (2, 3), and a second die member (30) having a second cavity (27) and a protruding pin (29) provided at the center of the second cavity (27), the second cavity (27) having a diameter greater than the outer diameter of the leg (6) to expandingly deform the leg (6) of the self-piercing rivet (1) in its radial outward direction, **characterized in that** the first die member (26) is disposable at a position facing with the punch (14) until the leg (6) of the self-piercing rivet (1) is driven into the workpieces (2, 3) in a straight direction and starts piercing the receiving-side workpiece (3) adjacent to the first die member (26), and the second die member (30) is disposable at the position facing with the punch (14) in place of the first die member (26) to allow the leg (6) of the self-piercing rivet (1) being piercing the receiving-side workpiece (3) to be expanded and deformed in its radial outward direction when the leg (6) of the self-piercing rivet (1) starts piercing the receiving-side workpiece (3).

2. The apparatus as defined in claim 1 further including a C-shaped frame (11), wherein the punch (14) is attached to one of the ends of the C-shaped frame (11) to be movable toward the other end of the C-shaped frame (11), and the first and second die members (26, 30) are attached to the other end of the C-shaped frame (11), and wherein the other end of the C-shaped frame (11) is provided with a rotary table (31) for supporting the first and second die members (26, 30), the rotary table (31) being operable to allow either one of the first and second die members (26, 30) to be selectively positioned at the position facing with the punch (14) so as to receive the self-piercing rivet (1) to be driven by the punch (14),

3. The apparatus as defined in claim 1, which includes a plurality of die members to be replaceably used as at least one of the first and second die members (26, 30), depending on a piercing depth of the leg (6) of the self-piercing rivet (1) with respect to the workpieces (2, 3).

4. A self-piercing rivet setting system having self-piercing rivet setting apparatuses (9) each including a punch (14) and a die (18) for driving a self-piercing rivet (1) into a plurality of workpieces (2, 3) having a receiving-side workpiece (3) adjacent to the die (18), the self-piercing rivet (1) having a large-diameter head (5) and a hollowed leg (6) extending from the head (5), wherein when the self-piercing rivet (1) is driven into the workpieces (2, 3), the leg (6) is driven to pierce the workpieces (2, 3) while allowing the front end of the leg (6) to be expanded and deformed in its radial outward direction and to be stayed in the receiving-side workpiece (3) adjacent to the die (18) without passing therethrough to connect the plurality of workpieces (2, 3) with each other by the expanded leg (6) and the head (5); and wherein the self-piercing rivet setting system comprises a first self-piercing rivet setting apparatus including a first die member (26) which has a first cavity (25), a second self-piercing rivet setting apparatus including a second die member (38) which has a second cavity (27) and a protruding pin (29) provided at the center of the second cavity (30), the second cavity (27) and protruding pin (29) of the second die member (38) being adapted to allow the leg of the self-piercing rivet being piercing the workpieces (2, 3) to be expanded and deformed in its radial outward direction; **characterized in that**
the first cavity (25) of the first die member (26) is formed as a simple hole having a diameter capable of receiving a pressure deformation of the workpieces (2, 3) caused by a pressing force of the leg (6) of the self-piercing rivet (1) when the self-piercing rivet (1) is pressed against the first die member (26) by the punch (14); and exchanging means are provided for placing the first self-piercing rivet setting apparatus with respect to the workpieces (2, 3) until the leg (6) of the self-piercing rivet (1) is driven into the workpieces (2, 3) in a straight direction and starts piercing the receiving-side workpiece (3), and for placing the second self-piercing rivet setting apparatus with respect to the workpieces (2, 3) in place of the first self-piercing rivet setting apparatus to allow the leg (6) of the self-piercing rivet (1) being piercing the receiving-side workpiece (3) to be expanded and deformed in its radial outward direction when the leg (6) of the self-piercing rivet (1) starts piercing the receiving-side workpiece (3).

## Patentansprüche

1. Stanznietsetzvorrichtung (9) umfassend einen Stempel (14) und eine Matrize (18) zum Eintreiben eines Stanzniets (1) in mehrere Werkstücke (2, 3) einschließlich eines aufnahmeseitigen Werkstücks (3), das an die Matrize (18) angrenzt, wobei der Stanzniet (1) einen Kopf (5) mit großem Durchmesser und ein ausgehöhltes Bein (6) hat, das sich vom Kopf (5) erstreckt, wobei, wenn der Stanzniet (1) in die Werkstücke (2, 3) eingetrieben wird, das Bein (6) eingetrieben wird, um die Werkstücke (2, 3) zu durchstanzen, wobei das vordere Ende des Beins (6) aufgeweitet und in seiner radialen Richtung nach außen verformt werden und in dem aufnahmeseitigen Werkstück (3) angrenzend an den Stempel (18) verbleiben kann, ohne durch es hindurchzugehen, um die mehreren Werkstücke (2, 3) durch das aufgeweitete Bein (6) und den Kopf (5) miteinander zu verbinden; und wobei die Matrize (18) ein erstes Matrizenglied (26) mit einer ersten Aushöhlung (25) umfasst, die als einfaches Loch gebildet ist und einen Durchmesser hat, der in der Lage ist, eine Druckverformung der Werkstücke (2, 3) aufzunehmen, und ein zweites Matrizenglied (30) mit einer zweiten Aushöhlung (27) und einem vorstehenden Stift (29) umfasst, der in der Mitte der zweiten Aushöhlung (27) vorgesehen ist, wobei die zweite Aushöhlung (27) einen Durchmesser hat, der größer ist als der Außendurchmesser des Beins (6), um das Bein (6) des Stanzniets (1) in seiner radialen Richtung nach außen durch Aufweitung zu verformen; **dadurch gekennzeichnet, dass**
das erste Matrizenglied (26) in einer dem Stempel (14) gegenüberliegenden Position angeordnet werden kann, bis das Bein (6) des Stanzniets (1) in einer geraden Richtung in die Werkstücke (2, 3) eingetrieben ist und beginnt, das an das erste Matrizenglied (26) angrenzende, aufnahmeseitige Werkstück (3) zu durchstanzen, und das zweite Matrizenglied (30) anstelle des ersten Matrizenglieds (26) in der dem Stempel (14) gegenüberliegenden Position angeordnet werden kann, sodass das Bein (6) des Stanzniets (1), das das aufnahmeseitige Werkstück (3) durchstanzt, aufgeweitet und in seiner radialen Richtung nach außen verformt werden kann, wenn das Bein (6) des Stanzniets (1) beginnt, das aufnahmeseitige Werkstück (3) zu durchstanzen.

2. Vorrichtung nach Anspruch 1, weiter umfassend einen C-förmigen Rahmen (11), wobei der Stempel (14) an einem der Enden des C-förmigen Rahmens (11) bewegbar zum anderen Ende des C-förmigen Rahmens (11) angebracht ist und das erste und das zweite Matrizenglied (26, 30) am anderen Ende des C-förmigen Rahmens (11) angebracht sind, und wobei das andere Ende des C-förmigen Rahmens (11) mit einem Drehtisch (31) versehen ist, um das erste und das zweite Matrizenglied (26, 30) zu tragen, wobei der Drehtisch (31) derart betätigt werden kann, dass entweder das erste oder das zweite Matrizenglied (26, 30) selektiv an der dem Stempel (14) gegenüberliegenden Position positioniert werden kann, um den Stanzniet (1) aufzunehmen, der vom Stempel (14) eingetrieben werden soll.

3. Vorrichtung nach Anspruch 1, die mehrere Matrizenglieder umfasst, die abhängig von einer Durchstanztiefe des Beins (6) des Stanzniets (1) in Bezug auf die Werkstücke (2, 3) austauschbar sind, um wenigstens als erstes oder zweites Matrizenglied (26, 30) verwendet werden zu können.

4. Stanznietsetzsystem mit Stanznietsetzvorrichtungen (9), jeweils umfassend einen Stempel (14) und eine Matrize (18) zum Eintreiben eines Stanzniets (1) in mehrere Werkstücke (2, 3) mit einem aufnahmeseitigen Werkstück (3), das an die Matrize (18) angrenzt, wobei der Stanzniet (1) einen Kopf (5) mit großem Durchmesser und ein ausgehöhltes Bein (6) hat, das sich vom Kopf (5) erstreckt, wobei, wenn der Stanzniet (1) in die Werkstücke (2, 3) eingetrieben wird, das Bein (6) eingetrieben wird, um die Werkstücke (2, 3) zu durchstanzen, wobei das vordere Ende des Beins (6) aufgeweitet und in seiner radialen Richtung nach außen verformt werden und in dem aufnahmeseitigen Werkstück (3) angrenzend an den Stempel (18) verbleiben kann, ohne durch es hindurchzugehen, um die mehreren Werkstücke (2, 3) durch das aufgeweitete Bein (6) und den Kopf (5) miteinander zu verbinden; und
wobei das Stanznietsetzsystem eine erste Stanznietsetzvorrichtung mit einem ersten Matrizenglied (26) mit einer ersten Aushöhlung (25) und eine zweite Stanznietsetzvorrichtung mit einem zweiten Matrizenglied (38) mit einer zweiten Aushöhlung (27) und einem vorstehenden Stift (29) umfasst, der in der Mitte der zweiten Aushöhlung (30) vorgesehen ist, wobei die zweite Aushöhlung (27) und der vorstehende Stift (29) des zweiten Matrizenglieds (38) dazu angepasst sind, dass das Bein des Stanzniets, das die Werkstücke (2, 3) durchstanzt, aufgeweitet und in seiner radialen Richtung nach außen verformt werden kann, **dadurch gekennzeichnet, dass**
die erste Aushöhlung (25) des ersten Matrizenglieds (26) als einfaches Loch gebildet istmit einem Durchmesser, der in der Lage ist, eine Druckverformung der Werkstücke (2, 3) aufzunehmen, die durch eine Presskraft des Beins (6) des Stanzniets (1) verursacht wird, wenn der Stanzniet (1) vom Stempel (14) gegen das erste Matrizenglied (26) gepresst wird; und dass Austauschmittel vorgesehen sind, um die erste Stanznietsetzvorrichtung in Bezug auf die Werkstücke (2, 3) zu platzieren, bis das Bein (6) des Stanzniets (1) in einer geraden Richtung in die Werkstücke (2, 3) eingetrieben ist und beginnt, das aufnahmeseitige Werkstück (3) zu durchstanzen, und um die zweite Stanznietsetzvorrichtung in Bezug auf die Werkstücke (2, 3) anstelle der ersten Stanznietsetzvorrichtung zu platzieren, sodass das Bein (6) des Stanzniets (1), das das aufnahmeseitige Werkstück (3) durchstanzt, aufgeweitet und in seiner radialen Richtung nach außen verformt werden kann, wenn das Bein (6) des Stanzniets (1) beginnt, das aufnahmeseitige Werkstück (3) zu durchstanzen.

## Revendications

1. Appareil de pose (9) de rivets auto-perforants comprenant un poinçon (14) et une matrice (18) permettant d'enfoncer un rivet auto-perforant (1) dans une pluralité de pièces à usiner (2, 3) comprenant une pièce à usiner de côté récepteur (3) adjacente à la matrice (18), le rivet auto-perforant (1) ayant une tête de grand diamètre (5) et une jambe creuse (6) partant de la tête (5), où lorsque le rivet auto-perforant (1) est mené dans les pièces à usiner (2, 3), la jambe (6) est menée pour percer les pièces à usiner (2, 3) tout en permettant à l'extrémité frontale de la jambe (6) d'être dilatée et déformée dans sa direction externe radiale et d'être maintenue dans la pièce à usiner (3) de côté recepteur adjacente à la matrice (18) sans la traverser pour relier la pluralité de pièces à usiner (2, 3) les unes aux autres au moyen de la jambe dilatée (6) et de la tête (5) ; et où la matrice (18) comprend un premier élément de matrice (26) comportant une première cavité (25) constituée d'un simple trou et ayant un diamètre capable de subir une déformation sous pression des pièces à usiner (2, 3) et un second élément de matrice (30) comportant une seconde cavité (27) et une cheville saillante (29) placée au centre de la seconde cavité (27), la seconde cavité (27) ayant un diamètre supérieur au diamètre extérieur de la jambe (6) pour déformer en se dilatant la jambe (6) du rivet auto-perforant (1) dans sa direction externe radiale, **caractérisé en ce que**
le premier élément de matrice (26) peut être placé dans une position face au poinçon (14) jusqu'à ce que la jambe (6) du rivet auto-perforant (1) soit menée dans les pièces à usiner (2, 3) dans une direction rectiligne et commence à percer la pièce à usiner de côté récepteur (3) adjacente au premier élément de matrice (26) et le second élément de matrice (30) peut être placé dans la position face au poinçon (14) à la place du premier élément de matrice (26) pour permettre à la jambe (6) du rivet auto-perforant (1) entrain de percer la pièce à usiner de côté récepteur (3) d'être dilatée et déformée dans sa direction externe radiale lorsque la jambe (6) du rivet auto-perforant (1) commence à percer la pièce à usiner de côté récepteur (3).

2. Appareil tel que défini dans la revendication 1 comprenant en outre un châssis en forme de C (11), où le poinçon (14) est fixé à l'une des extrémités du châssis en forme de C (11) pour pouvoir être déplacé vers l'autre extrémité du châssis en forme de C (11) et les premier et second éléments de matrice (26, 30) sont fixés à l'autre extrémité du châssis en forme de C (11) et où l'autre extrémité du châssis en forme de C (11) comporte un plateau tournant (31) permettant de supporter les premier et second éléments de matrice (26, 30), le plateau tournant (31) fonctionnant de manière à ce que l'un ou l'autre des premier et second éléments de matrice (26, 30) puissent être sélectivement positionnés face au poinçon (14), de manière à accueillir le rivet auto-perforant (1) devant être enfoncé par le poinçon (14).

3. Appareil tel que défini dans la revendication 1, qui comprend une pluralité d'éléments de matrice utilisés pour remplacer au moins l'un des premier et second éléments de matrice (26, 30), en fonction de la profondeur de perçage de la jambe (6) du rivet auto-perforant (1) par rapport aux pièces à usiner (2, 3).

4. Système de pose de rivets auto-perforants comprenant des appareils de pose de rivets auto-perforants (9) comportant chacun un poinçon (14) et une matrice (18) pour enfoncer un rivet auto-perforant (1) dans une pluralité de pièces à usiner (2, 3) ayant une pièce à usiner de côté récepteur (3) adjacente à la matrice (18), le rivet auto-perforant (1) ayant une tête de grand diamètre (5) et une jambe creuse (6) partant de la tête (5), où lorsque le rivet auto-perforant (1) est mené dans les pièces à usiner (2, 3), la jambe (6) est menée pour percer les pièces à usiner (2, 3) tout en permettant l'extrémité frontale de la jambe (6) d'être dilatée et déformée dans sa direction externe radiale et d'être maintenue dans la pièce usinée de côté récepteur (3) adjacente à la matrice (18) sans la traverser pour relier la pluralité de pièces à usiner (2, 3) les unes aux autres au moyen de la jambe dilatée (6) et de la tête (5) ; et où le système de pose de rivets auto-perforants comprend un premier appareil de pose de rivets auto-perforants comprenant un premier élément de matrice (26) comportant une première cavité (25), un second appareil de pose de rivets auto-perforants comprenant un second élément de matrice (38) comportant une seconde cavité (27) et une cheville saillante (29) placée au centre de la seconde cavité (30), la seconde cavité (27) et la cheville saillante (29) du second élément de matrice (38) étant conçues pour permettre à la jambe du rivet auto-perforant devant percer les pièces à usiner (2, 3) d'être dilatée et déformée dans sa direction externe radiale, **caractérisé en ce que**
la première cavité (25) du premier élément de matrice (26) soit constituée d'un simple trou ayant un diamètre capable de subir une déformation sous pression des pièces à usiner (2, 3) provoquée par une force de pression de la jambe (6) du rivet auto-perforant (1) lorsque le poinçon (14) appuie le rivet auto-perforant (1) contre le premier élément de matrice (26) ; et des moyens d'échange sont prévus pour placer le premier appareil de pose de rivets auto-perforants en regard des pièces à usiner (2, 3) jusqu'à ce que la jambe (6) du rivet auto-perforant (1) soit menée dans les pièces à usiner (2, 3) dans une direction rectiligne et commence à percer la pièce à usiner de côté récepteur (3) et pour placer le second appareil de pose de rivets auto-perforants en regard des pièces à usiner (2, 3) à la place du premier appareil de pose de rivets auto-perforants pour permettre à la jambe (6) du rivet auto-perforant (1) devant percer la pièce à usiner côté récepteur (3) d'être dilatée et déformée dans sa direction externe radiale lorsque la jambe (6) du rivet auto-perforant (1) commence à percer la pièce à usiner de côté récepteur (3).
